**Europäisches Patentamt**

**European Patent Office**

**Office européen des brevets**

(19)

(11) Veröffentlichungsnummer : **0 111 787**
**B1**

(12)

# EUROPÄISCHE PATENTSCHRIFT

(45) Veröffentlichungstag der Patentschrift :
30.12.86

(21) Anmeldenummer : 83111999.5

(22) Anmeldetag : 30.11.83

(51) Int. Cl.⁴ : **B 23 B 29/034**, B 23 B 31/04

(54) Werkzeugaufnahme für ein Werkzeug an einer Werkzeugmaschine.

(30) Priorität : 22.12.82 CH 7476/82

(43) Veröffentlichungstag der Anmeldung :
27.06.84 Patentblatt 84/26

(45) Bekanntmachung des Hinweises auf die Patenterteilung : 30.12.86 Patentblatt 86/52

(84) Benannte Vertragsstaaten :
CH DE FR GB IT LI

(56) Entgegenhaltungen :
DE-B- 1 040 342
FR-A- 1 431 085
FR-A- 2 495 978
GB-A-   620 985
GB-A- 2 026 354

(73) Patentinhaber : **Werkzeugmaschinenfabrik Oerlikon-Bührle AG**
**Birchstrasse 155**
**CH-8050 Zürich (CH)**

(72) Erfinder : **Berweger, Markus**
**Segantinistrasse 175**
**CH-8049 Zürich (CH)**

## Beschreibung

Die Erfindung bezieht sich auf eine Werkzeugaufnahme für ein Werkzeug an einem Planschieber einer Werkzeugmaschine.

Entsprechend dem Oberbegriff des Patentanspruches 1 ausgebildete Werkzeugaufnahmen sind bereits bekannt, z. B. gemäss DE-AS-1 040 3-42. Bei diesen Werkzeugaufnahmen werden mit einem Konus oder mit einem Zylinder versehene Werkzeuge in eine Hülse im Planschieber eingeschoben und mit an sich bekannten Werkzeugspannvorrichtungen festgehalten. Zur eigenen Achse werden die Werkzeuge durch Nuten im Mitnehmerflansch bzw. durch in diese eingreifende Mitnehmer positioniert.

Solche Werkzeugaufnahmen bedingen aber eine relativ grosse Bauhöhe des Planschiebers, da die normierte Hülsen eine bestimmte Höhe aufweisen, die zudem durch die Werkzeugspannvorrichtung noch vergrössert wird.

Weiter ist die Kreis-Position eines Werkzeuges auf dem Planschieber nicht sehr genau, da die Mitnehmer in den Nuten des Flansches Spiel aufweisen.

Die Erfindung, wie sie in den Ansprüchen gekennzeichnet ist, löst die Aufgabe, eine genaue, durch automatische Werkzeugwechsler wechselbare Werkzeugaufnahme mit kompakter Bauhöhe zu schaffen, die auch zur Aufnahme von Werkzeugen mit normiertem Schaft geeignet ist.

Die durch die Erfindung erreichten Vorteile sind im wesentlichen darin zu sehen, dass die Werkzeugaufnahme eine exakte Positionierung des Werkzeuges ermöglicht und dass der Planschieber keine besonders grosse Bauhöhe aufweisen muss.

Im folgenden wird die Erfindung anhand von lediglich einen Ausführungsweg darstellenden Zeichnungen näher erläutert. Es zeigt :

Figur 1  einen Längsschnitt durch eine Werkzeugaufnahme.

Figur 2  einen Schnitt gemäss Linie I-I in Figur 1.

Figur 3  einen Längsschnitt durch eine weitere Werkzeugaufnahme.

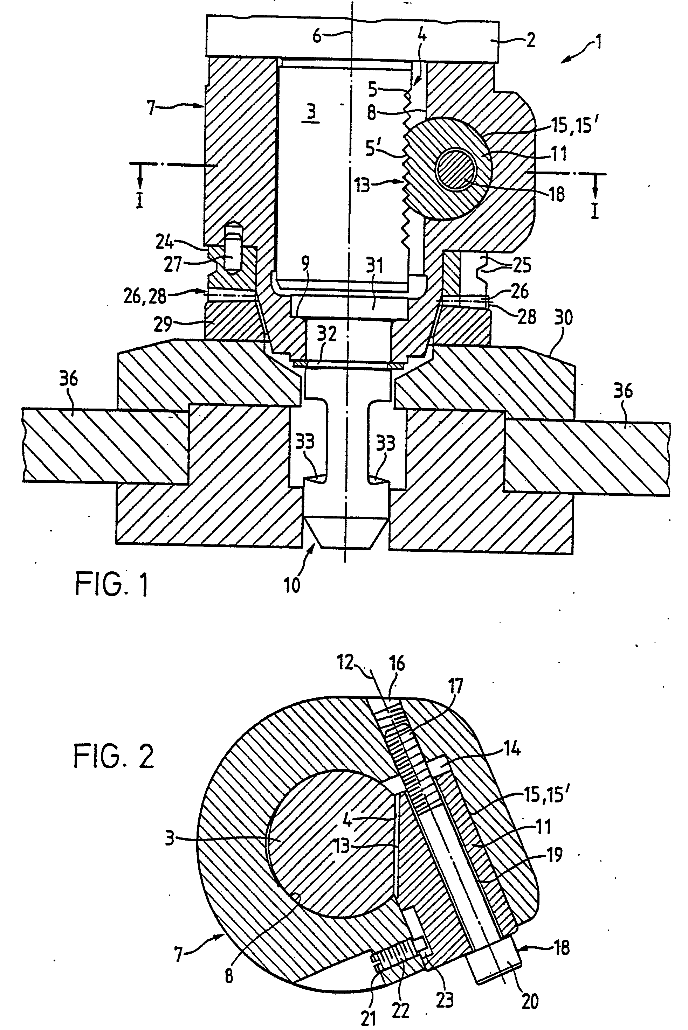

Die Figuren 1 und 2 zeigen eine Werkzeugaufnahme 1 für ein nicht näher dargestelltes Werkzeug 2 mit einem normierten Zylinderschaft 3. Dieser weist seitlich eine gerade Keilfläche 4 auf, die Rillen 5 aufweist, die im wesentlichen senkrecht zu einer Achse 6 des Werkzeuges bzw. der Werkzeugaufnahme 1 verlaufen. Der Zylinderschaft 3 ist von einer Adapterhülse 7 umgeben. Diese weist im Inneren eine zylindrische Innenfläche 8 sowie eine quer dazu angeordnete Stützfläche 9 für einen Verriegelungskörper 10 auf.

Zur Befestigung des Werkzeuges 2 in der Adapterhülse 7 ist in einer Ausnehmung 14 ein Klemmstück 11 vorgesehen. Dieses ist quer zur Achse 6, parallel zu den Rillen 5 längs einer Achse 12 verschiebbar gelagert und weist eine Keilfläche 13 mit ebensolchen Rillen 5' auf. Die Keilfläche 13 ist gegen die Achse 12 geneigt angeordnet. Die Ausnehmung 14 sowie das Klemmstück 11 weisen gebogene Führungsflächen 15, 15' auf, die parallel zur Achse 12 verlaufen. Die Adapterhülse 7 weist koaxial zur Achse 12 eine Bohrung 16 mit einem Gewinde 17 auf. Darin ist eine Schraube 18 eingeschraubt, die das Klemmstück 11 in einer Bohrung 19 durchdringt, aber mit ihrem Kopf 20 daran aufliegt. In einer weiteren Bohrung 21 im Klemmstück 11 ist eine Schraube 22 eingesetzt, die in einen Schlitz 23 im Klemmstück 11 eingreift und dessen Hub beschränkt.

Am Umfang weist die Adapterhülse 7 einen Ring 24 auf, der Nuten 25 für den Greifer eines Werkzeugwechslers sowie eine Planverzahnung 26 aufweist. Der Ring 24 ist mit einem Stift 27 gegen Verdrehung gesichert.

Die Adapterhülse 7 liegt über die Planverzahnung 26 auf einem ebenfalls mit Planverzahnung 28 versehenen, koaxial zur Achse 6 angeordneten Ring 29 auf dem Planschieber 30 auf, der auf Führungen 36 läuft.

Der Verriegelungskörper 10, der mit einem Flansch 31 und einem Ring 32 an der Adapterhülse 7 gesichert ist, weist Spannflächen 33 auf, die zur Achse 6 leicht aus der Senkrechten geneigt angeordnet sind. Durch Einschieben eines hier nicht dargestellten, aber an sich bekannten Keiles kann die Adapterhülse 7 im Planschieber 30 eingespannt werden.

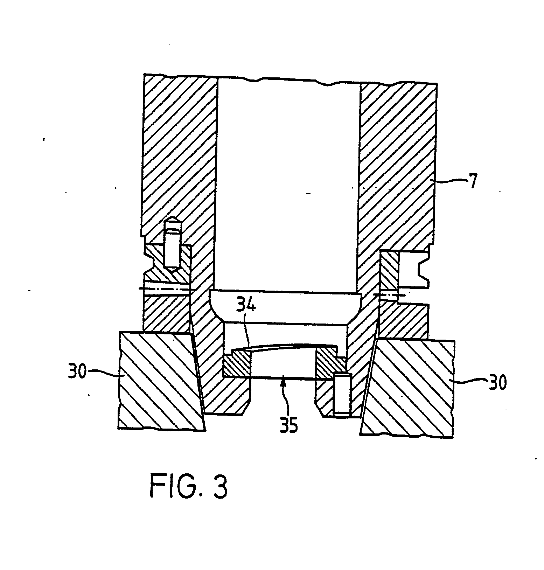

Figur 3 zeigt eine weitere Ausführung einer Adapterhülse 7, bei der eine Stützfläche 34 eine Steigung entsprechend einem Gang eines Gewindes aufweist. Aus Gründen der Bearbeitung ist diese Stützfläche 34 auf einem eingesetzten Ring 35 vorgesehen. Hier nicht näher dargestellte Flächen eines Verriegelungskörpers spannen dabei die Adapterhülse 7 in dem sie auf der Stützfläche 34 wandern.

Zum Befestigen eines Werkzeuges 2 auf einem Planschieber 30 wird der Zylinderschaft 3 bei ausgefahrenem Klemmstück 11 in die zylindrische Innenfläche 8 der Adapterhülse 7 eingesetzt. Durch drehen der Schraube 18 werden die Rillen 5 und 5' gegenseitig in Eingriff gebracht, sodass das Werkzeug 2 festsitzt. Der Zilinderschaft 3 stützt sich dabei seitlich an der weitgehend zylindrischen Innenfläche 8 ab. Anschliessend wird die Adapterhülse 7 mit ihrer Planverzahnung 26 auf die Planverzahnung 28 des Planschiebers 30 aufgesetzt und mit dem Verriegelungskörper 10 im Planschieber 30 eingespannt. Die Zentrierung der Adapterhülse 7 besorgen die Planverzahnungen 26 und 28.

## Patentansprüche

1. Werkzeugaufnahme (1) für ein Werkzeug (2) an einem Planschieber (30) einer Werkzeugmaschine, wobei eine Adapterhülse (7) zur Aufnahme von Werkzeugen (2) mit normiertem Schaft (3) vorhanden ist, dadurch gekennzeichnet, dass die Adapterhülse eine am Umfang angebrachte Nut (25) für den Greifer eines Werkzeugwechslers und eine stirnseitig angebrachte Planverzahnung (26) zum Zentrieren mit einer entsprechend ausgebildeten Planverzahnung (28) auf dem Planschieber (30) aufweist.

2. Werkzeugaufnahme gemäss Anspruch 1, dadurch gekennzeichnet, dass Nut (25) und Planverzahnung (26) an einen am Umfang der Adapterhülse (7) angeordneten Ring (24) angebracht sind.

3. Werkzeugaufnahme gemäss Anspruch 1 oder 2, dadurch gekennzeichnet, dass die Adapterhülse (7) eine Stützfläche (9, 34) zur Verriegelung der Adapterhülse (7) auf dem Planschieber (30) aufweist.

4. Werkzeugaufnahme gemäss Anspruch 3, dadurch gekennzeichnet, dass die Stützfläche (9) als ebene Ringfläche ausgebildet ist.

5. Werkzeugaufnahme gemäss Anspruch 3, dadurch gekennzeichnet, dass die Stützfläche (34) als Schraubenfläche ausgebildet ist.

## Claims

1. Tool receiving device (1) for a tool (2) at a cross-feed slide (30) of a machine tool, comprising an adapter sleeve (7) for receiving and retaining the tool (2) having a standard stem (3), characterised in that the adapter sleeve (7) being provided with a circumferential groove (25) intended to be engaged by a gripper of a tool changer and with a face gear (26) at an end face of the adapter sleeve (7) for centering the adapter sleeve (7) with a corresponding face gear (28) provided at the cross-feed slide (30).

2. A tool receiving device as claimed in claim 1, characterised in that the groove (25) and the face gear (26) being provided at a ring member (24) being arranged at the circumference of the adapter sleeve (7).

3. A tool receiving device as claimed in claim 1 or 2, characterised in that the adapter sleeve (7) comprises a support surface (9, 34) for locking the adapter sleeve (7) to the cross-feed slide (30).

4. A tool receiving device as claimed in claim 3, characterised in that the support surface (9) comprises a substantially planar, annular surface.

5. A tool receiving device as claimed in claim 3, characterised in that the support surface (9) comprises a substantially helical surface.

## Revendications

1. Logement d'outil (1) pour un outil (2) fixé à un coulisseau transversal (30) d'une machine-outil comportant une douille d'adaptateur (7) pour recevoir des outils (2) à tige normalisée (3), caractérisé en ce que la douille d'adaptateur comporte à sa périphérie une rainure (25) pour l'organe de prise d'un changeur d'outil et sur la face frontale une denture plane (26) pour le centrage avec une denture plane (28) réalisée de façon correspondante sur le coulisseau transversal.

2. Logement d'outil selon la revendication 1, caractérisé en ce que la rainure (25) et la denture plane (26) sont réalisées dans une bague (24) prévue à la périphérie de la douille d'adaptateur (7).

3. Logement d'outil selon la revendication 1 ou 2, caractérisé en ce que la douille d'adaptateur (7) comporte une surface d'appui (9, 34) pour verrouiller la douille d'adaptateur (7) sur le coulisseau transversal (30).

4. Logement d'outil selon la revendication 3, caractérisé en ce que la surface d'appui (9) est réalisée sous la forme d'une surface annulaire plane.

5. Logement d'outil selon la revendication 3, caractérisé en ce que la surface d'appui (34) est réalisée sous la forme d'une surface hélicoïdale.

FIG. 1

FIG. 2

FIG. 3